Europäisches Patentamt

European Patent Office

Office européen des brevets

(11) Veröffentlichungsnummer: **0 403 857**
**A2**

## (12) EUROPÄISCHE PATENTANMELDUNG

(21) Anmeldenummer: **90110419.0**

(22) Anmeldetag: **01.06.90**

(51) Int. Cl.⁵: **B60R 21/26**

(30) Priorität: **22.06.89 DE 3920401**

(43) Veröffentlichungstag der Anmeldung:
**27.12.90 Patentblatt 90/52**

(84) Benannte Vertragsstaaten:
**DE FR GB IT**

(71) Anmelder: **Dynamit Nobel Aktiengesellschaft**
**Postfach 12 61**
**D-5210 Troisdorf/Bez. Köln(DE)**

(72) Erfinder: **Bender, Richard, Dr.**
**Hohe Marter 28**
**D-8560 Lauf(DE)**
Erfinder: **Winkler, Hans**
**Kornblumenstrasse 1**
**D-8510 Fürth(DE)**

(54) **Gasgenerator für einen Airbag.**

(57) Bei einem Gasgenerator ist um einen zylindrischen, mit gasfreisetzenden Substanzen (2) gefüllten Druckbehälter (1) eine Kammer (6) angebracht, die ein Filter (7) enthält und die vom Gasstrom entlang der Zylindermantelfläche in ihrer ganzen Länge durchströmt wird. Ein solcher Gasgenerator eignet sich besonders für einen Airbag, der in erster Linie nur das Aufschlagen des Kopfes des Fahrers auf der Lenksäule verhindern soll, weil die anderen Schutzfunktionen, die ein Airbag als einziges Schutzgerät sonst auch im Fahrzeug leisten muß, vom Sicherheitsgurt übernommen werden.

Fig. 1

EP 0 403 857 A2

## Gasgenerator für einen Airbag

Die Erfindung richtet sich auf einen Gasgenerator für einen Airbag mit einem im wesentlichen zylindrischen Druckbehälter, der mit gasfreisetzenden Substanzen gefüllt ist, an einer Bodenseite ein Anzündelement aufweist, und bei dem im Mantelbereich Gasaustrittsöffnungen und ein Filter vorhanden sind. Ähnliche Gasgeneratoren sind aus der DE 34 43 325 A1 und der DE 37 42 656 A1 bekannt.

Der Gasgenerator gemäß DE 37 42 656 A1 erfüllt zwar die an ihn gestellten Anforderungen, erfordert aber verhältnismäßig viel Platz beim Einbau im Lenkrad. Außerdem wird die Oberfläche des Gasgenerators relativ heiß, ein zusammenfallender Airbag kann an der Druckbehälterwand anschmelzen und dabei beschädigt werden; auch der Fahrgast kann sich an der heißen Oberfläche verletzen.

In vielen Ländern besteht für Fahrer und Beifahrer Gurt-Anschnallpflicht. Ein angeschnallter Fahrer muß daher bei einem Unfall in der Regel nicht alleine vom Airbag zurückgehalten und aufgefangen werden.

Der Erfindung liegt die Aufgabe zugrunde, den Gasgenerator für einen Airbag weiter zu vereinfachen und zu verbilligen, wobei Überlegungen mit einfließen, daß bei angeschnalltem Fahrer der Airbag kleiner sein darf.

Die Aufgabe wird von einem Airbag gelöst, der dadurch gekennzeichnet ist, daß das Filter in einer Kammer außerhalb um den Mantel des Druckbehälters untergebracht ist, auf der dem Anzündelement abgewandten Seite Gasdurchtrittsöffnungen in der Druckbehälterwand vorhanden sind und die Gasaustrittsöffnungen aus der Kammer in einem dem Anzündelement benachbarten Bereich liegen.

Der Gasgenerator hat im wesentlichen eine zylindrische Form und läßt sich in der Lenksäule unterbringen; seine Achse fällt mit der Lenkerachse zusammen. Die Gasführung ist dabei so, daß der Gasweg durch das Filter möglichst lang wird. Der Druckbehälter enthält nur die gasfreisetzenden Substanzen und hat die Öffnungen nur an einem Ende. (Beim im Lenkrad eingebauten Druckbehälter ist das Anzündelement dabei dem Fahrer zugewandt, und die Öffnungen im Druckbehälter sind an der vom Fahrer abgewandten Seite.) Um den Druckbehälter ist eine Kammer, die zwar auch einem gewissen Überdruck standhalten muß aber bei weitem nicht der Spitzenbelastung wie der eigentliche Druckbehälter, und nur für die Umlenkung des Gases und zur Aufnahme des Filters benötigt wird. Die Gasaustrittsöffnungen sind in einem dem Anzündelement benachbarten Bereich. Auf diese Weise wird erreicht, daß die austretenden Gase schon etwas abgekühlt sind und die mitgerissenen heißen Schlackenpartikel sehr weitgehend abgeschieden werden und nicht in den Airbag gelangen. Ein solcher kompakter, sehr effizienter Gasgenerator läßt sich praktisch in jeder Lenksäule eines Fahrzeuges oder auch beispielsweise in den Rücklehnen von Massentransportmitteln wie Bus, Flugzeug etc. unterbringen. Die Gesamtfläche der Gasaustrittsöffnungen aus der Kammer ist bevorzugt etwa doppelt bis dreimal so groß wie die Gesamtfläche der Gasdurchtrittsöffnungen vom Druckbehälter in die Kammer.

Die Erfindung ist beispielhaft in der Zeichnung dargestellt und weiter erläutert. Es zeigen:

Figur 1 Schnitt durch einen Gasgenerator, bei dem die Kammer an einer Seite an einem Flansch am Druckbehälter befestigt ist;

Figur 2 Schnitt durch einen Gasgenerator, bei dem die Kammer an einer Seite am Träger für das Anzündelement befestigt ist.

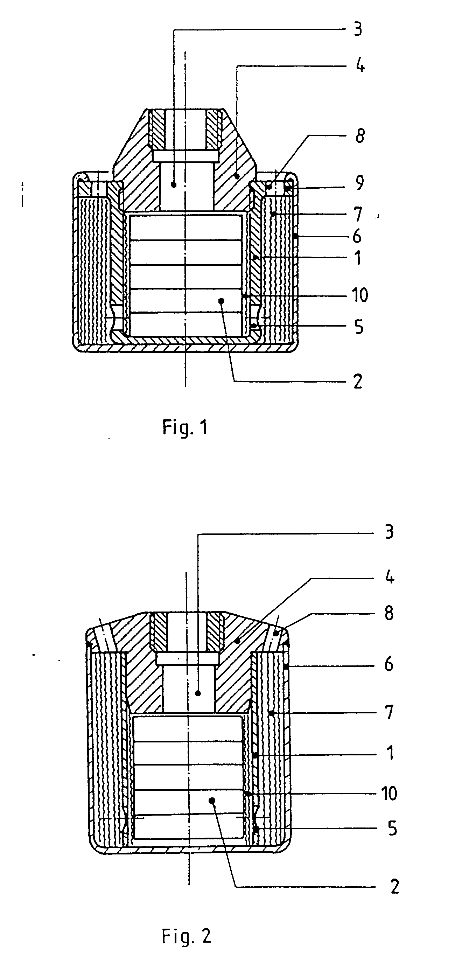

In einem zylindrischen Druckbehälter 1 ist der Treibsatz in Form einer Tablettensäule aus Ringtabletten 2 untergebracht. Ein Anzündelement 3 stößt mittig an den Boden der Tablettensäule. Der elektrische Teil mit der Sensorik ist nicht extra dargestellt; er gehört zum Stand der Technik. Ein Träger 4 für das Anzündelement 3 bildet dabei die Bodenseite für den Druckbehälter. Die Gasdurchtrittsöffnungen 5 sind in der Zylinderwand des Druckbehälters 1 auf der vom Anzündelement 3 abgewandten Seite. Sie führen in eine Kammer 6, die den Druckbehälter 1 ringartig umschließt. Die Kammer 6 dient zur Aufnahme eines Filters 7, mit dem Schlacketeilchen aus dem Gas herausgefiltert werden müssen. Beim Durchströmen durch das Filter 7 kühlt das Gas auch ab. Auf der dem Anzündelement 3 benachbarten Seite der Kammer 6 sind die Gasaustrittsöffnungen 8; das Verhältnis der Flächen der Gasdurchtrittsöffnungen 5 zu den Flächen der Gasaustrittsöffnungen 8 liegt bei 1 : 3. Die Gasaustrittsöffnungen 8 ermöglichen bei Figur 1 ein zylindrisches, bei Figur 2 ein kegelförmiges Ausströmen des Gases in den nicht eingezeichneten, die Vorderseite des Gasgenerators umgebenden, zusammengefalteten Airbag. Bei der Ausführungsform gemäß Figur 1 wird ein Wandbereich der Kammer 6 von einem am Druckbehälter 1 befestigten Flansch 9 gebildet, über den die Kammerwand umgebördelt ist und in dem die Gasaustrittsöffnungen 8 aus der Kammer 6 angebracht sind. In Figur 2 ist die Kammer 6 an dem Träger 4 angeschweißt und die Gasaustrittsöffnungen 8 werden von Bohrungen im Wandbereich dieses Trägers 4 gebildet. In beiden Figuren sind die Tabletten 2 zu einer Tablettensäule zusammengefaßt und von einem Drahtgewebe 10 umgegeben, wodurch ein rundum gleichmäßiger Abstand der Tabletten 2 von der Innenwand des Druckbehälters 1 erreicht wird.

Der Gasgenerator ist besonders geeignet zum Aufblasen kleiner Airbags (Volumen etwa 30 - 35 l), und er paßt praktisch in jede Lenksäule. Wegen der Gurt-Anschnallpflicht in vielen Ländern wird das weitere Sicherheitssystem Airbag vor allem daraufhin ausgelegt, daß der Aufprall des Kopfes des Fahrers auf dem Lenkrad gemildert wird, was schon mit einem kleinen Airbag erreicht werden kann. Bisherige Airbags haben ein Volumen in der Größenordnung 60 - 70 l. Der vorgeschlagene Gasgenerator ist sehr kostengünstig zu fertigen, was zur schnelleren Einführung des Airbags auch in kleinen Wagen führen dürfte.

**Ansprüche**

Gasgenerator für einen Airbag mit einem im wesentlichen zylindrischen Druckbehälter (1), der mit gasfreisetzenden Substanzen (2) gefüllt ist, an einer Bodenseite ein Anzündelement (3) aufweist und bei dem im Mantelbereich Gasaustrittsöffnungen und ein Filter (7) vorhanden sind, **dadurch gelennzeichnet**, daß das Filter (7) in einer Kammer (6) außerhalb des Mantels des Druckbehälters (1) untergebracht ist, auf der dem Anzündelement (3) abgewandten Seite Gasdurchtrittsöffnungen (5) in der Druckbehälterwand vorhanden sind und die Gasaustrittsöffnungen (8) aus der Kammer in einem dem Anzündelement (3) benachbarten Bereich liegen.

Fig. 1

Fig. 2